# EUROPEAN PATENT APPLICATION

(11) **EP 4 761 343 A1**
(43) Date of publication of application: **17.06.2026**
(21) Application number: 24851591.8
(22) Date of filing: 23.07.2024
(51) Int. Cl.: H04W 24/10, H04W 8/22, H04W 52/02

(54) **TERMINAL, BASE STATION, COMMUNICATION METHOD, AND INTEGRATED CIRCUIT**

(30) Priority: 08.08.2023 JP 2023129364
(71) Applicant: Panasonic Intellectual Property Corporation of America, Torrance, CA 90504 (US)
(72) Inventor: YAMAMOTO, Tetsuya, Kadoma-shi, Osaka 571-0057 (JP); SUZUKI, Hidetoshi, Kadoma-shi, Osaka 571-0057 (JP)
(74) Representative: Grünecker Patent- und Rechtsanwälte PartG mbB
(86) International application number: PCT/JP2024/026272
(87) International publication number: WO 2025/033162

(57) **Abstract**

This terminal is provided with: a control circuit that determines control information pertaining to at least one of a calculation processing amount and power consumption, which are due to the use of an artificial intelligence model on a terminal side; and a transmission circuit that transmits the control information.

## Description

### Technical Field

The present disclosure relates to a terminal, a base station, a communication method, and an integrated circuit.

### Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and flexibly provides radio communication in response to a wide variety of needs.

The 3rd Generation Partnership Project (3GPP) as an international standardizing body has been specifying New Radio (NR) as one of 5G radio interfaces.

### Citation List

### Non-Patent Literature

NPL 1
RP-213599, "New SI: Study on Artificial Intelligence (AI) / Machine Learning (ML) for NR Air Interface," Qualcomm (Moderator), December 2021.

### Summary of Invention

However, there is room for study on a method for improving the efficiency of radio communication.

One non-limiting exemplary embodiment of the present disclosure facilitates providing a base station, a terminal, and a communication method capable of improving the efficiency of radio communication.

A terminal according to one exemplary embodiment of the present disclosure includes: control circuitry, which, in operation, determines control information related to at least one of computational complexity and/or power consumption due to use of an artificial intelligence model on a terminal side; and transmission circuitry, which, in operation, transmits the control information.

It should be noted that general or specific embodiments may be implemented as a system, a method, an integrated circuit, a computer program, a storage medium, or any selective combination thereof.

According to one exemplary embodiment of the present disclosure, it is possible to improve the efficiency of radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of compression of channel state information (CSI) in a spatial domain and a frequency domain by utilizing machine learning (ML)/artificial intelligence (AI) technology;
FIG. 2 is a block diagram illustrating a configuration example of a part of a base station;
FIG. 3 is a block diagram illustrating a configuration example of a part of a terminal;
FIG. 4 is a diagram illustrating exemplary process sets related to AI/ML processing;
FIG. 5 is a diagram illustrating exemplary process set combinations related to AI/ML processing;
FIG. 6 is a diagram illustrating exemplary process sets related to AI/ML processing;
FIG. 7 is a diagram illustrating exemplary process set combinations related to AI/ML processing;
FIG. 8 is a diagram illustrating an operation example of a terminal and a base station;
FIG. 9 is a diagram illustrating an exemplary architecture;
FIG. 10 is a block diagram illustrating a configuration example of the base station;
FIG. 11 is a block diagram illustrating a configuration example of the terminal;
FIG. 12 is a diagram of an exemplary architecture of a 3GPP NR system;
FIG. 13 is a schematic diagram illustrating functional separation between an NG-RAN and a 5GC;
FIG. 14 is a sequence diagram of Radio Resource Control (RRC) connection setup/reconfiguration procedure;
FIG. 15 schematically illustrates usage scenarios of enhanced Mobile BroadBand (eMBB), massive Machine Type Communications (mMTC), and Ultra Reliable and Low Latency Communications (URLLC); and
FIG. 16 is a block diagram illustrating an exemplary 5G system architecture for a non-roaming scenario.

### Description of Embodiments

Hereinafter, embodiments of the present disclosure will be described in detail with reference to the accompanying drawings.

In NR, for example, an access scheme based on Orthogonal Frequency Division Multiplexing (OFDM) is employed for downlink transmission. Further, Multiple-Input Multiple-Output (MIMO) is employed in order to increase a data rate. In order to effectively extract the performance of MIMO, a closed-loop control is introduced, and Channel State Information (CSI) feedback is performed from a terminal (for example, also referred to as the user equipment (UE)) to a base station (for example, also referred to as gNB). In the feedback of CSI, realizing high performance with a smaller amount of control information is expected.

In 3GPP Release 18 (for example, also referred to as Rel. 18), it has been discussed to utilize an Artificial Intelligence (AI) technology such as Machine Learning (ML) (hereinafter, also referred to as "AI/ML") for a radio interface of NR (for example, see NPL 1). As a use case where the AI/ML technology is utilized, for example, CSI feedback, beam control, and location estimation have been studied.

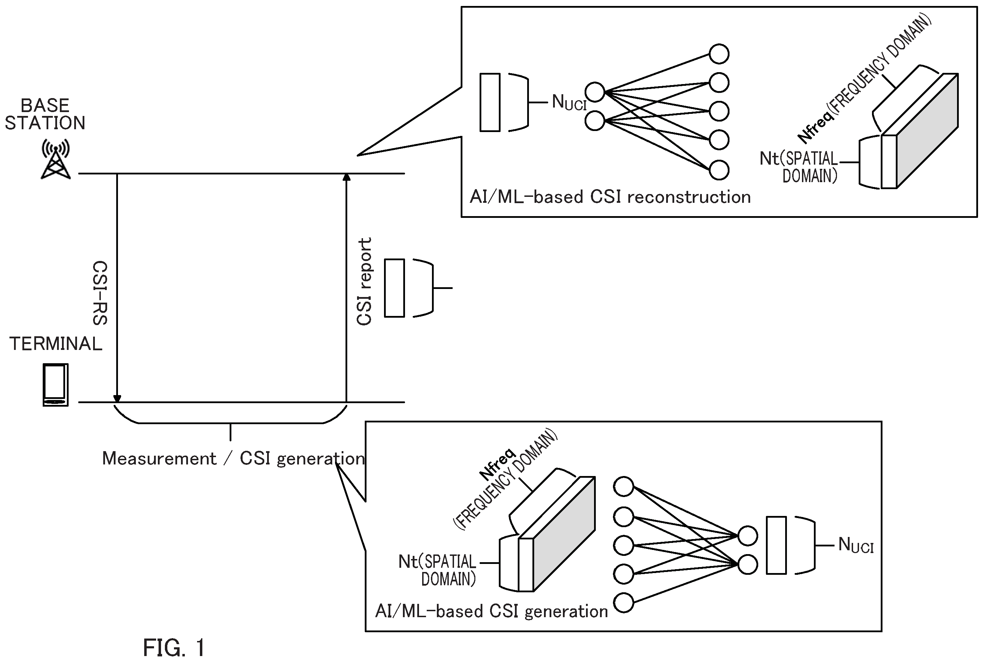

For example, for the CSI feedback, a method for compressing the information amount of CSI in a spatial domain and a frequency domain by utilizing the AI/ML technology (hereinafter, also referred to as CSI compression) has been studied. For example, in the machine learning, an AI/ML model (for example, an artificial intelligence model) such as a neural network is trained with a huge amount of training data, thereby making it possible to extract features thereof automatically. In the CSI compression, for example, an algorithm, termed as an autoencoder, mainly for dimension compression and reconstruction of image data is available. For example, as illustrated in FIG. 1, a CSI matrix represented by a two-dimensional region of a spatial domain and a frequency domain is regarded as an image, an encoder that is utilized for the compression of the autoencoder is utilized for CSI compression processing at the UE side, and a decoder that performs the reconstruction is utilized for CSI reconstruction processing at the base station or network (for example, also referred to as the base station/network) side.

In general, a model size of a high-performance AI/ML model is large, and complexity or computational complexity, or power consumption may be large in processing at the UE. Therefore, in practical use of the AI/ML model, a balance between improvement in performance (e.g., communication performance) by using the AI/ML and complexity and power consumption at the UE is required.

In a use case in which the AI/ML technology is applied to a radio interface and the AI/ML model (or a part of the AI/ML model) is disposed on the UE side, operating the AI/ML model by model-ID-based life cycle management (LCM) has been discussed. In a case of the model-ID-based LCM, the base station/network side can determine the determination of use of the AI/ML model regardless of whether the AI/ML model is trained on the UE side or the network side.

For example, including a function of monitoring (referred to as performance monitoring) the performance of the AI/ML model in one of the LCMs has been discussed. Examples of the performance monitoring of the AI/ML model include performance monitoring (e.g., also referred to as Category 1 monitoring) for checking behavior of an unverified new model or parameter, and performance monitoring (e.g., also referred to as Category 2 monitoring) for checking whether the currently used AI/ML model or parameter is suitable for the current environment.

For example, in the performance monitoring for checking the behavior of the unverified new model or parameter, as an operation after the performance of the AI/ML model (group) is monitored, the AI/ML model (group) may not be changed (or updated), the parameter of the AI/ML model (group) may be updated, the AI/ML model (group) itself may be updated, or the configuration of the preconfigured AI/ML model (group) may be released or stopped.

Further, for example, in the performance monitoring for checking whether the currently used AI/ML model or parameter is suitable for the current environment, as an operation after the performance of the AI/ML model is monitored, the currently operated (activated) AI/ML model may not be changed (or updated), the parameter of the currently operated (activated) AI/ML model may be updated, the currently operated (activated) AI/ML model may be changed (switched) to another AI/ML model in the preconfigured AI/ML model group, or the operation of the currently operated (activated) AI/ML model may be stopped (deactivated) and the operation may be reverted (fallback) to the CSI report method not using AI/ML.

In the model-ID-based LCM in which the base station/network side determines the determination of use of the AI/ML model, it is expected that the base station/network specifies information related to the computational complexity and power consumption of the UE in order to determine whether a balance between the communication performance by use of the AI/ML model and the computational complexity and power consumption of the UE in a case of using the AI/ML model is achieved.

Here, for example, a method in which the AI/ML model on the UE side is implemented in the base station/network, and the determination of use of the AI/ML model in the UE is performed based on the computational complexity or power consumption of the AI/ML model may be used. Meanwhile, the actual implementation of the AI/ML model may vary depending on the hardware or software of the UE. Therefore, in the base station/network, it is difficult to specify the actual computational complexity or power consumption of the AI/ML model on the UE side without information from the UE.

For example, there is room for consideration in a method in which the UE reports information related to at least one of the computational complexity and/or the power consumption (hereinafter, also referred to as "computational complexity/power consumption") to the base station/network.

In one non-limiting exemplary embodiment of the present disclosure, a method in which a UE reports the computational complexity/power consumption to a base station/network will be described. For example, in a use case in which the AI/ML model (or a part of the AI/ML model) is disposed on a UE side, a method will be described in which the base station/network appropriately determines the use of the AI/ML model on the UE side by considering a balance between the communication performance by use of the AI/ML model and the computational complexity/power consumption of the UE in a case where the base station/network side determines the determination of use of the AI/ML model. For example, the UE supports the determination of use of the AI/ML model in the base station/network by reporting, to the base station/network, information related to the computational complexity/power consumption by use of the AI/ML model on the UE side.

Hereinafter, one non-limiting exemplary embodiment of the present disclosure will be described.

### [Overview of Communication System]

A communication system according to one aspect of the present disclosure includes, for example, at least one base station and at least one terminal.

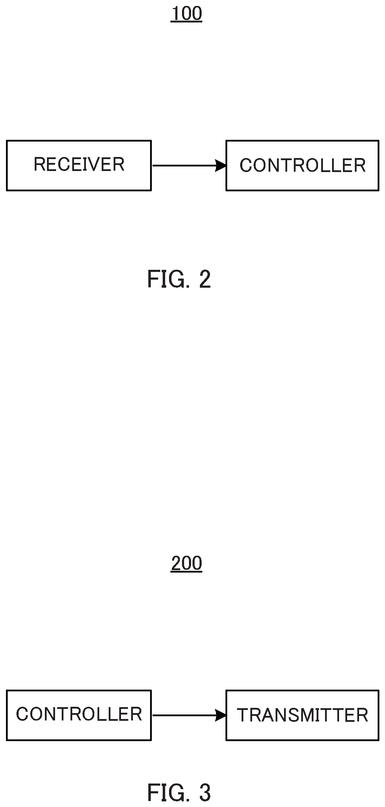

FIG. 2 is a block diagram illustrating a configuration example of a part of base station 100 according to an embodiment of the present disclosure, and FIG. 3 is a block diagram illustrating a configuration example of a part of terminal 200 according to the embodiment of the present disclosure.

In base station 100 illustrated in FIG. 2, a receiver (e.g., corresponding to reception circuitry) receives control information related to at least one of the computational complexity and/or the power consumption by use of the artificial intelligence model (AI/ML model) on a UE side. A controller (e.g., corresponding to control circuitry) controls the use of the artificial intelligence model on the UE side based on the control information.

In terminal 200 illustrated in FIG. 3, the controller (e.g., corresponding to control circuitry) determines control information related to at least one of the computational complexity and the power consumption by the use of the artificial intelligence model (AI/ML model) on the UE side. A transmitter (e.g., corresponding to transmission circuitry) transmits the control information.

### (Embodiment 1)

In the present embodiment, terminal 200 reports information related to the computational complexity/power consumption in terminal 200 to base station 100 (e.g., base station/network). The base station/network determines the use of the AI/ML model in terminal 200 based on the information reported from terminal 200.

As described above, the information related to the computational complexity/power consumption by the use of the AI/ML model on the UE side in terminal 200 supports the determination of use of the AI/ML model by the base station/network.

The information reported from terminal 200 may include any one of the information related to the computational complexity of terminal 200 and the information related to the power consumption of terminal 200 or may include both the information related to the computational complexity of terminal 200 and the information related to the power consumption of terminal 200.

For example, the information related to the computational complexity by the use of the AI/ML model on the UE side in terminal 200 may include information related to at least one of FLoating-point Operations (FLOPs) and/or a memory size of an inference process by the AI/ML model.

Further, for example, the information related to the power consumption by the use of the AI/ML model on the UE side in terminal 200 may include information related to an absolute value of a power consumption amount of terminal 200 in a case where the AI/ML model is used.

According to the present embodiment, the base station/network can specify (or understand) the computational complexity/power consumption of terminal 200 by the use of the AI/ML model on the UE side based on the information related to the computational complexity/power consumption reported from terminal 200, so that the determination of use of the AI/ML model on the UE side can be appropriately performed.

The reporting of information related to the computational complexity/power consumption from terminal 200 may be transmitted, for example, by a U-plane, higher layer signaling (e.g., Radio Resource Control (RRC)), Medium Access Control-Control Element (MAC-CE), or uplink control information (UCI).

### (Embodiment 2)

For example, the power consumption of a device (e.g., terminal 200) may depend on various factors, such as an operation state including a temperature or the like or another operation performed in parallel with the operation of using the AI/ML model in terminal 200. Therefore, for example, in a case where the absolute value of the power consumption amount in a case of using the AI/ML model in terminal 200 is reported, even when the power consumption amount of terminal 200 in a case of using the AI/ML model at a specific time is reported, there is a possibility that the base station/network cannot appropriately determine the use of the AI/ML model and cannot appropriately determine the next operation after the determination of the use of the AI/ML model.

Further, for example, in a case of processing having a large computational complexity but not having frequent access to a memory and processing having a small computational complexity but having frequent access to a memory, the power consumption may be the same in implementation of a certain UE, but may be different in implementation of another UE. As described above, the power consumption of the UE may vary depending on the implementation of the UE. Therefore, for example, in a case where the computational complexity or the memory size of terminal 200 is reported, even in a case where the computational complexity or the memory size in a case of using the AI/ML model is reported, a relationship between the power consumption of terminal 200 and the computational complexity or the memory size is unclear, so that there is a possibility that the base station/network cannot appropriately determine the use of the AI/ML model and cannot appropriately determine the next operation after the determination of the use of the AI/ML model.

Therefore, in the present embodiment, terminal 200 reports, for example, information related to a comparison between the computational complexity/power consumption in a case of using the AI/ML model and the computational complexity/power consumption in a case of not using the AI/ML model to the base station/network.

As described above, in the present embodiment, the information related to the comparison between the computational complexity/power consumption in a case of using the AI/ML model in terminal 200 and the computational complexity/power consumption in a case of not using the AI/ML model supports the determination of use of the AI/ML model by the base station/network.

The control information (or comparison target) reported from terminal 200 to the base station/network may be information related to any one of the computational complexity or the power consumption or may be information related to both the computational complexity and the power consumption.

For example, terminal 200 may report information related to whether the computational complexity/power consumption in a case of using the AI/ML model is larger (or smaller) than the computational complexity/power consumption in a case of not using the AI/ML model to the base station/network.

In order for the base station/network to correctly understand the information related to the comparison of the computational complexity/power consumption, it is expected that the recognition of a calculation method (e.g., method of determining the control information) of the computational complexity/power consumption used by terminal 200 for comparison is shared between terminal 200 and the base station/network.

The sharing of recognition of the calculation method of the computational complexity/power consumption used for comparison may be defined in advance by the standard, for example. Further, for example, in a case where the capability of terminal 200 or information related to the application ability of the AI/ML model is reported, terminal 200 may report the calculation method of the computational complexity/power consumption used for comparison to the base station/network. Further, the base station/network may configure the calculation method of the computational complexity/power consumption used for comparison to terminal 200 by a semi-static configuration such as RRC. Further, in a case where terminal 200 reports the information related to the comparison of the computational complexity/power consumption to the base station/network, terminal 200 may report the calculation method of the computational complexity/power consumption used for comparison.

For example, the calculation method of the computational complexity/power consumption may be a method based on at least one of average computational complexity/power consumption in a defined period, peak (maximum) computational complexity/power consumption occurring in the defined period, and total computational complexity/power consumption in the defined period. For example, the defined period may be a CSI computation time defined by the standard or may be configured by terminal 200 or the base station/network.

Further, for example, the comparison of the computational complexity may be performed based on at least one of the FLOPs and/or the memory size of the inference process by the AI/ML model.

According to the present embodiment, the base station/network can specify (or understand) a size relationship between the computational complexity/power consumption of terminal 200 under the same conditions between the operation by the use of the AI/ML model on the UE side and the existing operation (e.g., operation in a case where the AI/ML model on the UE side is not used). That is, the base station/network can accurately specify the situation of the computational complexity/power consumption in a case of using the AI/ML model on the UE side by comparing with the computational complexity/power consumption in a case of not using the AI/ML model on the UE side, regardless of the implementation of terminal 200.

As a result, the base station/network can appropriately determine the use of the AI/ML model on the UE side. Further, the base station/network can appropriately select the next operation (e.g., including an operation of continuing to use the AI/ML model, and an operation of stopping the operation of the currently operated AI/ML model and then falling back to a method not using AI/ML) after the determination of use of the AI/ML model on the UE side.

The reporting of information related to the comparison of the computational complexity/power consumption from terminal 200 may be transmitted by any of a U-plane, RRC, MAC-CE, and UCI.

### (Embodiment 3)

In the present embodiment, terminal 200 reports, for example, information related to a difference value between the computational complexity/power consumption in a case of using the AI/ML model and the computational complexity/power consumption in a case of not using the AI/ML model to the base station/network.

As described above, in the present embodiment, the information related to the difference value between the computational complexity/power consumption in a case of using the AI/ML model in terminal 200 and the computational complexity/power consumption in a case of not using the AI/ML model supports the determination of use of the AI/ML model by the base station/network.

The control information (or target for calculating the difference value) reported from terminal 200 to the base station/network may be information related to any one of the computational complexity and the power consumption or may be information related to both the computational complexity and the power consumption.

For example, terminal 200 may report, as the information related to the difference value between the computational complexity/power consumption in a case of using the AI/ML model and the computational complexity/power consumption in a case of not using the AI/ML model, a value representing an absolute value of the difference value or a value representing any of a plurality of ranges obtained by dividing (or quantizing) a level of the difference value to the base station/network.

In order for the base station/network to correctly understand the information related to the difference value of the computational complexity/power consumption, it is expected that the recognition of the calculation method (e.g., method of determining the control information) of the difference value of the computational complexity/power consumption in terminal 200 is shared between terminal 200 and the base station/network.

The sharing of recognition of the calculation method of the difference value of the computational complexity/power consumption may be defined in advance by the standard, for example. Further, for example, in a case where the capability of terminal 200 or information related to the application ability of the AI/ML model is reported, terminal 200 may report the calculation method of the difference value of the computational complexity/power consumption to the base station/network. Further, the base station/network may configure the calculation method of the difference value of the computational complexity/power consumption to terminal 200 by a semi-static configuration such as RRC. Further, in a case where terminal 200 reports the information related to the difference value of the computational complexity/power consumption to the base station/network, terminal 200 may report the calculation method of the difference value of the computational complexity/power consumption.

For example, the calculation method of the difference value of the computational complexity/power consumption may be a method based on at least one of average computational complexity/power consumption in a defined period, peak (maximum) computational complexity/power consumption occurring in the defined period, and total computational complexity/power consumption in the defined period. For example, the defined period may be a CSI computation time defined by the standard or may be configured by terminal 200 or the base station/network.

Further, for example, the difference value of the computational complexity may be calculated based on at least one of the FLOPs and/or the memory size of the inference process by the AI/ML model.

According to the present embodiment, the base station/network can specify (or understand) a relative value of the computational complexity/power consumption of terminal 200 between the operation by the use of the AI/ML model on the UE side and the existing operation (e.g., operation in a case where the AI/ML model on the UE side is not used). That is, the base station/network can accurately specify the computational complexity/power consumption in the AI/ML processing on the UE side by comparing with the computational complexity/power consumption in a case of not using the AI/ML model on the UE side, regardless of the implementation of terminal 200.

As a result, the base station/network can appropriately determine the use of the AI/ML model on the UE side. Further, the base station/network can appropriately select the next operation (e.g., including an operation of continuing to use the AI/ML model, and an operation of stopping the operation of the currently operated AI/ML model and then falling back to a method not using AI/ML) after the determination of use of the AI/ML model on the UE side.

The reporting of information related to the difference value of the computational complexity/power consumption from terminal 200 may be transmitted by any of a U-plane, RRC, MAC-CE, and UCI.

### (Embodiment 4)

In the present embodiment, terminal 200 may report, for example, as in Embodiment 2 and Embodiment 3, information related to a comparison or a difference value between the computational complexity/power consumption in a case of using the AI/ML model and the computational complexity/power consumption in a case of not using the AI/ML model to the base station/network.

Further, in the present embodiment, terminal 200 may report, for example, information related to a comparison or a difference value between the computational complexity/power consumption in a case of using a certain AI/ML model (e.g., first AI/ML model) and the computational complexity/power consumption in a case of using another AI/ML model (e.g., second AI/ML model) to the base station/network. Further, in the present embodiment, terminal 200 may report, for example, information related to a comparison or a difference value between the computational complexity/power consumption in a case of using a certain parameter (e.g., first parameter) of the AI/ML model and the computational complexity/power consumption in a case of using a different parameter (e.g., second parameter) of the AI/ML model to the base station/network.

As described above, in the present embodiment, the information related to a comparison or a difference value between the computational complexity/power consumption in a case of using a certain AI/ML model in terminal 200 and the computational complexity/power consumption in a case of using another AI/ML model or using a different parameter in the same AI/ML model supports the determination of use of the AI/ML model by the base station/network.

The control information (or comparison target or target for calculating the difference value) reported from terminal 200 to the base station/network may be information related to any one of the computational complexity or the power consumption or may be information related to both the computational complexity and the power consumption.

For example, terminal 200 may report, to the base station/network, information related to whether the computational complexity/power consumption in a case of using the AI/ML model currently configured in advance in terminal 200 or the AI/ML model currently used by terminal 200 is larger (or smaller) than the computational complexity/power consumption in a case of not using the AI/ML model, or information related to the difference value of the computational complexity/power consumption.

Further, terminal 200 may report, to the base station/network, information related to whether the computational complexity/power consumption in a case of using the AI/ML model currently configured in advance in terminal 200 or the AI/ML model currently used by terminal 200 is larger (or smaller) than the computational complexity/power consumption in a case of using an AI/ML model that can be configured in advance in terminal 200 in the future, an AI/ML model that is not currently used by terminal 200, or the computational complexity/power consumption of a case with a different parameter (unused parameter) of the AI/ML model that is currently configured in advance in terminal 200 or the AI/ML model that is currently used by terminal 200, or information related to a difference value of the computational complexity/power consumption.

In order for the base station/network to correctly understand the information related to the comparison or the difference value of the computational complexity/power consumption, it is expected that the recognition of the calculation method of the computational complexity/power consumption used for comparison or the calculation method of the difference value of the computational complexity/power consumption in terminal 200 (e.g., method of determining the control information) is shared between terminal 200 and the base station/network.

The sharing of recognition of the calculation method of the computational complexity/power consumption used for comparison or the calculation method of the difference value of the computational complexity/power consumption in terminal 200 (hereinafter, referred to as "calculation method related to comparison or difference value") may be defined in advance by the standard, for example. Further, for example, in a case where the capability of terminal 200 or information related to the application ability of the AI/ML model is reported, terminal 200 may report the calculation method related to the comparison or the difference value to the base station/network. Further, the base station/network may configure the calculation method related to the comparison or the difference value to terminal 200 by a semi-static configuration such as RRC. Further, in a case where terminal 200 reports the information related to the comparison or the difference value of the computational complexity/power consumption to the base station/network, terminal 200 may report the calculation method related to the comparison or the difference value.

For example, the calculation method related to the comparison or the difference value may be a method based on at least one of average computational complexity/power consumption in a defined period, peak (maximum) computational complexity/power consumption occurring in the defined period, and total computational complexity/power consumption in the defined period. For example, the defined period may be a CSI computation time defined in the standard, or may be configured by terminal 200 or the base station/network.

Further, for example, the difference value of the computational complexity may be calculated based on at least one of the FLOPs and/or the memory size of the inference process by the AI/ML model.

According to the present embodiment, the base station/network can specify (or understand) a size relationship or a relative value of the computational complexity/power consumption of terminal 200 between the operation by the use of the AI/ML model on the UE side and the existing operation (e.g., operation in a case where the AI/ML model on the UE side is not used) or the operation in a case where the AI/ML model or the parameter is changed. That is, as in Embodiment 2 and Embodiment 3, the base station/network can accurately specify the computational complexity/power consumption in the AI/ML processing on the UE side regardless of the implementation of terminal 200, and can specify the size relationship or the relative value of the computational complexity/power consumption between the AI/ML models that can be configured in terminal 200 or between the parameters of the AI/ML model.

As a result, the base station/network can appropriately determine the use of the AI/ML model on the UE side. Further, the base station/network can appropriately select the next operation (e.g., including an operation of continuing to use the AI/ML model, an operation of switching the AI/ML model or the parameter to be configured in advance or used, or an operation of stopping the use of the AI/ML model or the operation of the currently operated AI/ML model and falling back to a method not using AI/ML) after the determination of use of the AI/ML model on the UE side.

The reporting of information related to the comparison or the difference value of the computational complexity/power consumption from terminal 200 may be transmitted by any of a U-plane, RRC, MAC-CE, and UCI.

Further, the comparison of the computational complexity/power consumption in the control information (e.g., information related to the comparison result or the difference value) reported from terminal 200 to the base station/network in the present embodiment is not limited to the comparison between the computational complexity/power consumption in a case of using the AI/ML model and the computational complexity/power consumption in a case of not using the AI/ML model, and the comparison between the computational complexity/power consumption in a case of using a certain AI/ML model and the computational complexity/power consumption in a case of using another AI/ML model or a different parameter of the same AI/ML model.

For example, a comparison result or a difference value between the computational complexity/power consumption in a case of not using a certain AI/ML model and the computational complexity/power consumption in a case of using another AI/ML model or a different parameter of the certain AI/ML model may be reported. Alternatively, a comparison result or a difference value of the computational complexity/power consumption between a plurality of AI/ML models or parameters that are not currently used by terminal 200 may be reported.

Further, in the present embodiment, a reference model used for the comparison or the calculation of the difference value of the computational complexity/power consumption in the control information (e.g., information related to the comparison result or the difference value) reported from terminal 200 to the base station/network may be defined, and the comparison between the computational complexity/power consumption in a case of using a certain AI/ML model and the computational complexity/power consumption of the reference model, the comparison between the computational complexity/power consumption in a case of using another AI/ML model or a different parameter of the same AI/ML model and the computational complexity/power consumption of the reference model, and the comparison between the computational complexity/power consumption in a case of not using the AI/ML model and the computational complexity/power consumption of the reference model may be performed, and the comparison results or the difference values thereof may be reported. A structure or a parameter of the reference model for comparing the computational complexity/power consumption may be indicated or configured from the base station/network to terminal 200 or may be determined by terminal 200 and indicated to the base station/network. Further, the structure or the parameter of the reference model may be defined by the standard.

### (Embodiment 5)

In the present embodiment, terminal 200 reports, for example, information related to the usage rate or the occupancy rate of the computational complexity/power consumption to the base station/network. As described above, in the present embodiment, the information related to the usage rate or the occupancy rate of the computational complexity/power consumption in terminal 200 supports the determination of use of the AI/ML model by the base station/network.

The information reported from terminal 200 may be information related to the usage rate or the occupancy rate of any one of the computational complexity and the power consumption or may be information related to the usage rate or the occupancy rate of both the computational complexity and the power consumption.

For example, the information related to the usage rate or the occupancy rate of the computational complexity may be information related to an operation rate of a central processing unit (CPU) in a case where the AI/ML processing is executed by a general-purpose processor. For example, the information related to the usage rate or the occupancy rate of the computational complexity may be at least one of a current overall CPU operation rate of terminal 200, a CPU operation rate occupied by the computational processing in a case of using the AI/ML model, a CPU operation rate occupied by the computational processing in a case of not using the AI/ML model, and a CPU operation rate occupied by the computational processing in a case of using another AI/ML model or a different parameter of the same AI/ML model.

Further, for example, the information related to the usage rate or the occupancy rate of the computational complexity may be a usage rate or a resource occupancy rate occupied by the computational processing in case of using the AI/ML model in an accelerator dedicated to the AI/ML processing, in case of using the accelerator.

Further, the usage rate or the occupancy rate of the computational complexity and the usage rate or the occupancy rate of the power consumption may be separately calculated and reported. Alternatively, an integrated usage rate or an integrated occupancy rate calculated based on both the usage rate or the occupancy rate of the computational complexity and the usage rate or the occupancy rate of the power consumption may be defined, and information related to the integrated usage rate or the integrated occupancy rate may be reported.

In order for the base station/network to correctly understand the information related to the usage rate or the occupancy rate of the computational complexity/power consumption, it is expected that the recognition of the calculation method (e.g., method of determining the control information) of the usage rate or the occupancy rate of the computational complexity/power consumption in terminal 200 is shared between terminal 200 and the base station/network.

The sharing of recognition of the calculation method of the usage rate or the occupancy rate of the computational complexity/power consumption may be defined in advance by the standard, for example. Further, for example, in a case where the capability of terminal 200 or information related to the application ability of the AI/ML model is reported, terminal 200 may report the calculation method of the usage rate or the occupancy rate of the computational complexity/power consumption to the base station/network. Further, the base station/network may set the calculation method of the usage rate or the occupancy rate of the computational complexity/power consumption to terminal 200 by a semi-static configuration such as RRC. Further, in a case where terminal 200 reports the information related to the usage rate or the occupancy rate of the computational complexity/power consumption to the base station/network, terminal 200 may report the calculation method of the usage rate or the occupancy rate of the computational complexity/power consumption.

For example, the calculation method of the usage rate or the occupancy rate of the computational complexity/power consumption may be a method based on at least one of average computational complexity/power consumption in a defined period, peak (maximum) computational complexity/power consumption occurring in the defined period, and total computational complexity/power consumption in the defined period. For example, the defined period may be a CSI computation time defined by the standard or may be configured by terminal 200 or the base station/network.

According to the present embodiment, the base station/network can appropriately determine the use of the AI/ML model by considering the usage rate or the occupancy rate of the computational complexity/power consumption of terminal 200. Further, the base station/network can appropriately select the next operation (e.g., including an operation of continuing to use the AI/ML model, an operation of switching the AI/ML model or the parameter to be configured in advance or used, or an operation of stopping the use of the AI/ML model or the operation of the currently operated AI/ML model and falling back to a method not using AI/ML) after the determination of use of the AI/ML model on the UE side.

For example, the base station/network may determine the use of the AI/ML model such that the usage rate or the occupancy rate of the computational complexity/power consumption of terminal 200 does not exceed 100%.

Further, the base station/network can also configure the usage rate or the occupancy rate of the computational complexity/power consumption on the UE side to be 100% or more, for example. In this case, the processing may be implemented with best effort.

The reporting of information related to the usage rate or the occupancy rate of the computational complexity/power consumption from terminal 200 may be transmitted by any of a U-plane, RRC, MAC-CE, and UCI.

The embodiments of the present disclosure have been described above.

### (Variation 1)

In a case where the performance monitoring process is applied to terminal 200 (e.g., in a case where terminal 200 performs the performance monitoring of the AI/ML model), the information related to the computational complexity/power consumption of terminal 200 may be reported from terminal 200 to the base station/network together with information related to the performance monitoring process (e.g., information related to KPI of the AI/ML model, information related to a failure of the AI/ML model).

Further, the information related to the computational complexity/power consumption of terminal 200 may be reported from terminal 200 to the base station/network together with a signal for indicating the capability of terminal 200 related to the AI/ML.

Further, the information related to the computational complexity/power consumption of terminal 200 may be reported from terminal 200 to the base station/network in a case where a trigger from the base station/network is indicated, for example.

Further, the information related to the computational complexity/power consumption of terminal 200 may be reported from terminal 200 to the base station/network in a case where a set timer expires or in a case where the information related to the computational complexity/power consumption exceeds a threshold value, for example. The time setting of the timer and the threshold value of the information related to the computational complexity/power consumption may be defined in advance by the standard, may be configured by terminal 200 and reported to the base station/network, or may be configured in terminal 200 by a semi-static configuration such as RRC by the base station/network.

### (Variation 2)

Further, in the above-described embodiments, the case has been described in which the information related to the comparison result or the difference value of the computational complexity/power consumption between the two processes in which at least one of the presence or absence of the use of the AI/ML model, the AI/ML model, and the parameter is different is reported from terminal 200 to the base station/network, but the present disclosure is not limited thereto. For example, terminal 200 may report a result (or a difference value) of comparing the computational complexity/power consumption of three or more processes in which at least one of the presence or absence of the use of the AI/ML model, the AI/ML model, and the parameter is different to the base station/network. For example, terminal 200 may report the largest value (or smallest value) of the computational complexity/power consumption of the three or more processes.

### (Variation 3)

The computational complexity/power consumption in a case where the AI/ML model reported by terminal 200 is used may be the computational complexity/power consumption required for the inference process by the AI/ML model, the computational complexity/power consumption required for the performance monitoring, or the computational complexity/power consumption for another use. Further, a total of the plurality of processes (e.g., computational complexity/power consumption required for the inference process and the computational complexity/power consumption required for the performance monitoring) may be reported, or the plurality of processes may be separately reported. Further, the reporting timing of the computational complexity/power consumption of each process may be the same or different.

### [Operation Examples of Performance Monitoring and Operation Example after Performance Monitoring]

For example, the performance monitoring of the AI/ML model includes performance monitoring for checking the behavior of a new model or the parameters that have not been verified (e.g., referred to as Category 1 monitoring), and performance monitoring for checking whether the AI/ML model or the parameters currently in use is suitable for the current environment (e.g., referred to as Category 2 monitoring).

For example, Category 1 monitoring may be applied to the performance monitoring of the AI/ML model group preconfigured in terminal 200. Further, Category 2 monitoring may be applied to the performance monitoring of the AI/ML model currently in operation (activated). Further, a different embodiment and variation may be applied among the embodiments and variations corresponding to the category of the performance monitoring.

In Category 1 monitoring, as an operation after the performance of the AI/ML model (group) is monitored, the AI/ML model (group) may not be changed (or updated), the parameters of the AI/ML model (group) may be updated, the AI/ML model (group) itself may be updated, or the configuration of the preconfigured AI/ML model (group) may be released or stopped.

In Category 2 monitoring, as an operation after the performance of the AI/ML model is monitored, the AI/ML model currently in operation (activated) may not be changed (or updated), the parameters of the AI/ML model currently in operation (activated) may be updated, the AI/ML model currently in operation (activated) may be changed to another AI/ML model in the preconfigured AI/ML model group, or the operation of the AI/ML model currently in operation (activated) may be stopped (deactivated) and may be reverted (fallback) to the CSI report method that does not use the AI/ML.

In a functionality based life cycle management (LCM) based on the function, which operation to execute after the performance monitoring may be decided by terminal 200 depending on the implementation. Meanwhile, in a Model ID based LCM, the base station/network may decide which operation to execute after the performance monitoring.

### [Training Method of AI/ML Model]

In the CSI compression using the two-sided model in which an encoder that performs compression is used on the UE side and a decoder that performs reconstruction is used on the base station/network side, any of the following methods may be applied to the training method of the encoding unit (CSI compressor) on the UE side and the decoding unit (CSI reconstructor) on the base station/network side.

### <Training Method 1>

Training Method 1 is joint training of the two-sided model on one side (UE side or network side). In Training Method 1, for example, on the network side, both the CSI compressor and the CSI reconstructor are jointly trained. Information on the trained CSI compressor is delivered/transferred to the UE. Alternatively, on the UE side, both the CSI compressor and the CSI reconstructor may be jointly trained.

### <Training Method 2>

Training Method 2 is joint training of the two-sided model in each of the network side and the UE side. In Training Method 2, for example, both the UE side and the network side jointly train the CSI compressor and the CSI reconstructor by exchanging information, such as forward propagation (FP) or backward propagation (BP) between the UE and the network. Further, Training Method 2 also includes a method of training the two-sided model on one side (UE side or network side) by Training Method 1, fixing the model on one side, and exchanging information such as FP or BP between the UE and the network to train the model on the other side.

### < Training Method 3>

Training Method 3 is a method of individually training the CSI compressor on the UE side and the CSI reconstructor on the network side on the UE side and the network side. In Training Method 3, for example, both the CSI compressor and the CSI reconstructor are jointly trained on the network side, and after the training on the network side is completed, the network side shares a dataset used for the training (e.g., input data used for the training and output data thereof) with terminal 200. Terminal 200 trains the CSI compressor on the UE side by using the dataset shared from the network side.

For example, the performance monitoring using Approach 1 is useful in a case where the entire model training is performed on the network side and in Category 2 monitoring having the model ID based LCM. Meanwhile, the performance monitoring using Approach 2 is useful in a case where terminal 200 trains the CSI reconstructor on the network side.

[Use Cases]

The use case to which the above-described embodiment or variation is applied is not limited to the CSI compression (CSI feedback enhancement), and can be applied to any use case in which the AI/ML model is disposed on the UE side. For example, examples of the use case in which the AI/ML model is disposed on the UE side include CSI prediction by the AI/ML model on the UE side, beam prediction in a spatial domain or a time domain by the AI/ML model on the UE side, positioning accuracy enhancement by the AI/ML model on the UE side, and optimization of parameters and configurations of radio interface by the AI/ML.

Further, in a case where the processor or the AI/ML accelerator is general-purpose for the AI/ML processing, the AI/ML processing for different use cases may be executed simultaneously, or selection of a plurality of AI/ML processing for different use cases may be performed.

### [AI/ML Model]

The "AI/ML model (or model)" in one non-limiting exemplary embodiment of the present disclosure may include a physical model, a binary model, an executable model, a converted model, a source code model, a non-executable model, a raw model, and a logical model, or may be another model format.

### [Indication on AI/ML Processing Capability of Terminal 200]

Information indicating whether terminal 200 supports the functions, operations, or processing described in each of the above embodiments or variations may be transmitted (or indicated) from terminal 200 to base station 100 as, for example, capability information or a capability parameter of the UE.

As described above, in the CSI compression using the two-sided model in which the encoder that performs compression is used on the UE side and the decoder that performs reconstruction is used on the base station/network side, it is desirable to monitor the performance of the AI/ML model in order to ensure the availability of the AI/ML model of the CSI compressor on the UE side and the AI/ML model of the CSI reconstructor on the base station/network side. For example, as a case where the availability of the AI/ML model deteriorates, it is assumed that the AI/ML model trained in a certain environment (e.g., specific cell, hereinafter, cell #A) is used in the same environment (e.g., cell #A) as the training environment, but the environment is changed (e.g., cell #B) due to mobility of terminal 200 or the like, the training environment (e.g., cell #A) of the AI/ML model currently in use no longer matches, and the performance of the AI/ML model deteriorates. In this case, it is expected that terminal 200 switches to use of the AI/ML model (e.g., AI/ML model trained in environment of cell #B) suitable for the changed environment (e.g., cell #B) or performs appropriate processing such as stopping the processing of the CSI compression using the AI/ML.

As described above, it is expected to monitor the performance of the AI/ML model currently in operation or the performance of the AI/ML model that is not currently in operation but may be switched, in order to appropriately operate the AI/ML model.

In general, the model size of a high-performance AI/ML model is large, and in a case where the high-performance AI/ML model is implemented in terminal 200, a high calculation capability is expected. Therefore, terminal 200 may have a capability or a restriction on the operation and the processing using the AI/ML that terminal 200 can support (or execute simultaneously). Further, it is desirable that the network side understands the AI/ML processing capability of terminal 200.

Meanwhile, as the number of a plurality of AI/ML models or the number of processing processes related to each AI/ML model (e.g., CSI report based on the inference processing (e.g., compressed CSI report), the performance monitoring, and the like) increases, the amount of information for indicating the AI/ML processing capability of terminal 200 may be enormous and complicated.

Hereinafter, as an example, a case where terminal 200 has a capability of implementing each of the CSI report/monitoring by the "model A", the CSI report/monitoring by the "model B", and the existing CSI report/monitoring in which the AI/ML is not applied will be described.

In this case, it is expected that terminal 200 indicates information on whether terminal 200 can simultaneously execute the performance monitoring of the CSI report by model B in a case of executing the CSI report by model A, whether terminal 200 can simultaneously execute the performance monitoring of the existing CSI report in which the AI/ML is not applied in a case of executing the CSI report by model A, whether terminal 200 can simultaneously execute the performance monitoring of the CSI report by model A in a case of executing the CSI report by model B, whether or not terminal 200 can simultaneously execute the performance monitoring of the existing CSI report in which the AI/ML is not applied in a case of executing the CSI report by model B, whether terminal 200 can simultaneously execute the performance monitoring of the CSI report by model A in a case of executing the existing CSI report in which the AI/ML is not applied, whether terminal 200 can simultaneously execute the performance monitoring of the CSI report by model B in a case of executing the existing CSI report in which the AI/ML is not applied, whether terminal 200 can simultaneously execute the performance monitoring of the CSI report by model B and the performance monitoring of the existing CSI report in which the AI/ML is not applied in a case of executing the CSI report by model A, whether terminal 200 can simultaneously execute the performance monitoring of the CSI report by model A and the performance monitoring of the existing CSI report in which the AI/ML is not applied in a case of executing the CSI report by model B, and whether terminal 200 can simultaneously execute the performance monitoring of the CSI report by model A and the performance monitoring of the CSI report by model B in a case of executing the existing CSI report in which the AI/ML is not applied, in addition to the capability information indicating that terminal 200 can execute each model and the existing CSI report/monitoring.

For example, in order to simplify the indication on the AI/ML processing capability of terminal 200, the indication of the AI/ML processing capability by an "AI/ML process set (Process set)" and a "combination of process sets (Process set combination)" may be applied.

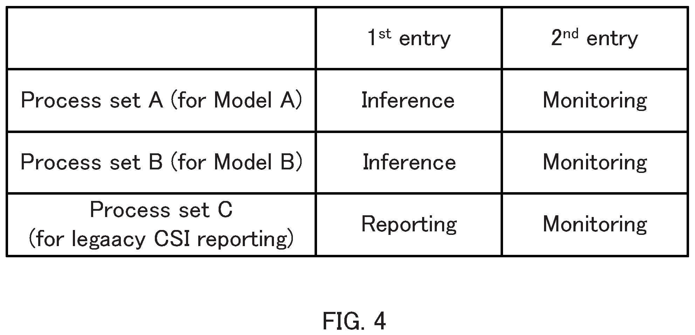

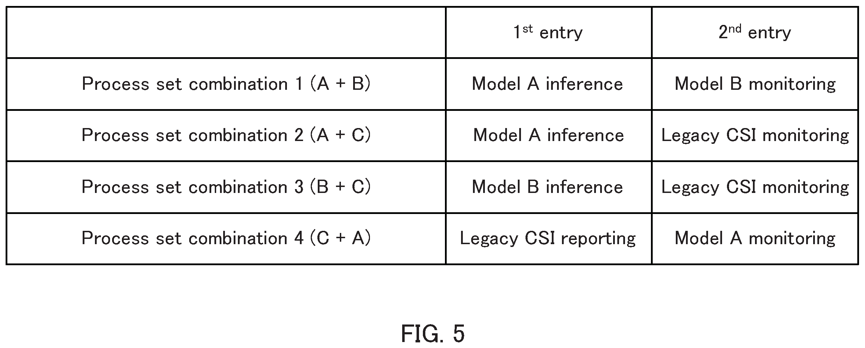

For example, the process set related to the AI/ML processing may be defined for each AI/ML model. For example, in the AI/ML process set, as illustrated in FIG. 4, each entry may correspond to a type of AI/ML process, such as the CSI report (e.g., CSI report based on the inference processing ("Inference") or the existing CSI report ("Reporting")), and the performance monitoring (e.g., "Monitoring"). Further, for example, the indication of the process set combination may be realized by indicating the combination of process sets. For example, as illustrated in FIG. 5, in a case of indicating the combination (A + B) of process set A and process set B, it is indicated that the CSI report based on the inference process by model A, which is the first entry of process set A ("Model A inference"), and the performance monitoring of the CSI report by model B, which is the second entry of process set B ("Model B monitoring"), can be executed simultaneously. In a case of indicating the combination of three or more process sets, it can be realized by increasing the entries of each process set.

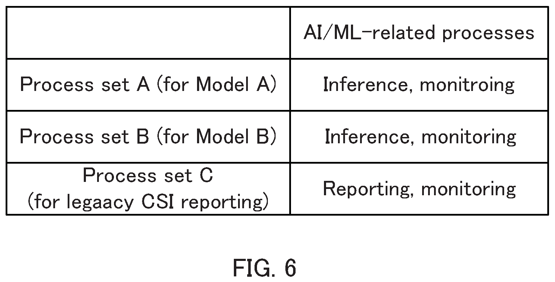

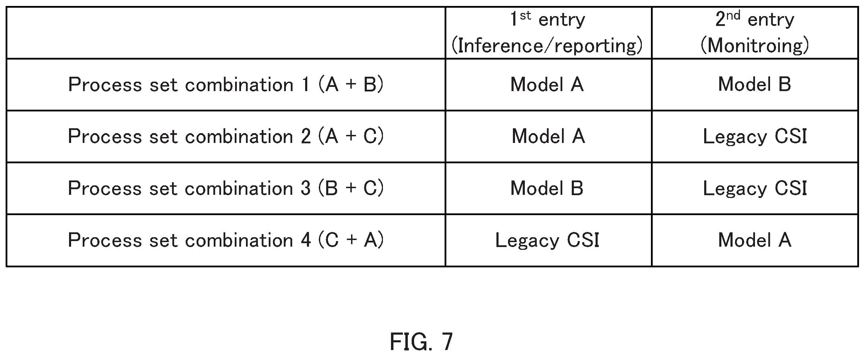

Further, for example, as illustrated in FIG. 6, the process set related to the AI/ML processing may be defined for each AI/ML model, and each process set may not have an entry and may include the AI/ML processing that can be executed in each AI/ML model. Further, for example, the combination of process sets may be defined by the model mapped to each entry. For example, which AI/ML processing (e.g., CSI report or performance monitoring) is indicated may be different depending on the position of the entry of the combination of process sets. For example, as illustrated in FIG. 7, the first entry of the combination of process sets may be defined as the CSI report, and the second entry may be defined as the performance monitoring. In this case, in a case of indicating the combination (A + B) of process set A and process set B, it is indicated that the CSI report based on the inference process by model A and the performance monitoring of the CSI report by model B can be executed simultaneously. In a case of indicating the combination of three or more process sets, it can be realized by increasing the entries of the combination of process sets.

Further, the AI/ML process indicated by the AI/ML process set and the combination of AI/ML process sets is not limited to the CSI report based on the inference process, the existing CSI report in which the AI/ML is not applied, and the performance monitoring, and may include processing (e.g., data collection) required for other AI/ML operations. Further, the AI/ML process set and the combination of AI/ML process sets may include a capability (e.g., a plurality of entries) related to a plurality of performance monitorings. For example, the capabilities related to the performance monitoring using the CSI reconstructor on the UE side and the performance monitoring not using the CSI reconstructor on the UE side may be separately indicated.

Further, the AI/ML processing capability of terminal 200 is not limited to the indication indicating whether to support the simple capability, and for example, the priority information of the capability may be indicated. Further, in a case where the priority is added to the AI/ML processing capability, each AI/ML process may be executed based on the configured priority.

### [Operation Examples of Base Station 100 and Terminal 200]

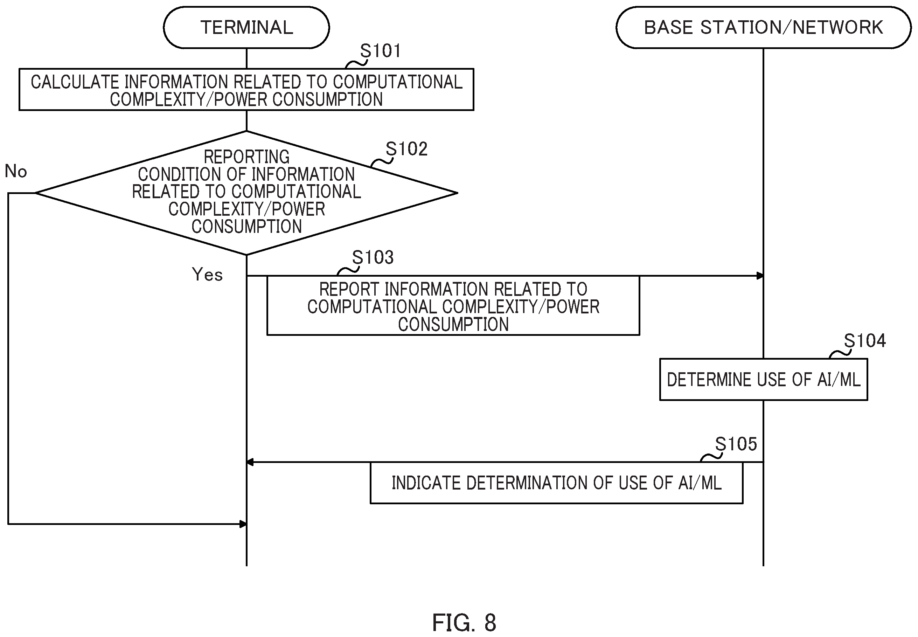

FIG. 8 is a flowchart illustrating an operation example of base station 100 (base station/network) and terminal 200.

In FIG. 8, terminal 200 calculates the information related to the computational complexity/power consumption in terminal 200 (S101).

Terminal 200 determines, for example, whether a condition (reporting condition) for reporting the information related to the calculated computational complexity/power consumption to the base station/network is satisfied (S102). When the reporting condition is not satisfied (S102: No), terminal 200 may end the processing illustrated in FIG. 8.

When the reporting condition is satisfied (S102: Yes), terminal 200 reports the information related to the computational complexity/power consumption to the base station/network, for example, according to the method described in the above-described embodiments or variations (S103).

The base station/network determines the use of the AI/ML model on the UE side based on the information related to the computational complexity/power consumption reported from terminal 200 (S104). The base station/network indicates, to terminal 200, the information related to the determination of the use of the AI/ML model on the UE side (S105).

### [Regarding Architecture]

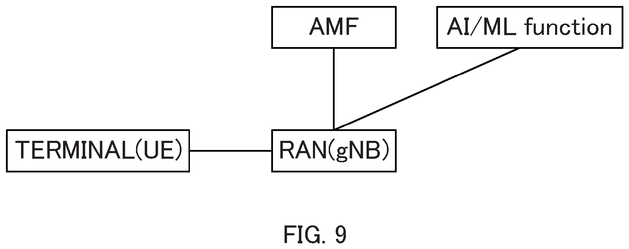

FIG. 9 illustrates an exemplary architecture including a function of processing the AI/ML. A part of the network architecture may be configured as illustrated in FIG. 9. Further, the function of processing the AI/ML may be included in an access and mobility management function (AMF) or a RAN (gNB).

### [Configuration of Base Station]

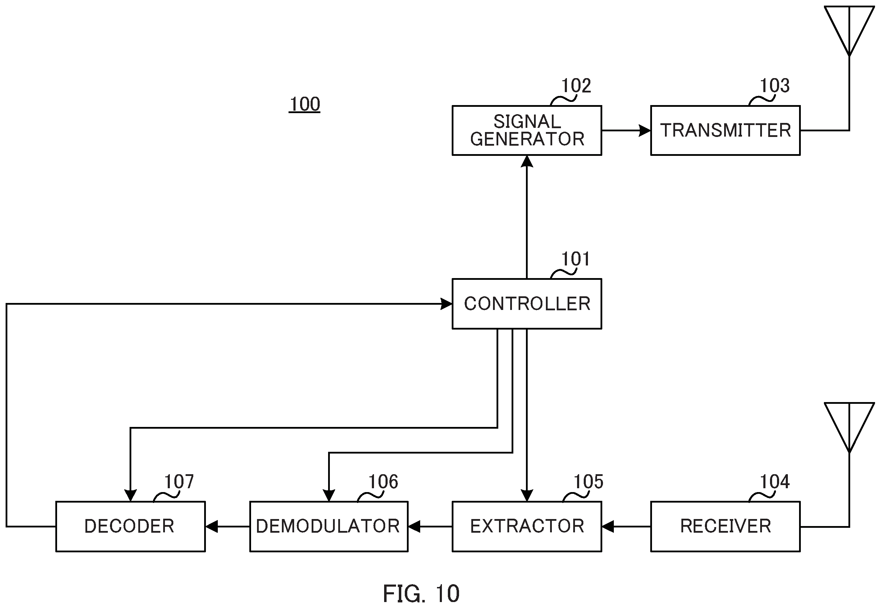

FIG. 10 is a block diagram illustrating a configuration example of base station 100. In FIG. 10, base station 100 includes controller 101, signal generator 102, transmitter 103, receiver 104, extractor 105, demodulator 106, and decoder 107.

At least one of controller 101, signal generator 102, extractor 105, demodulator 106, and decoder 107 illustrated in FIG. 10 may be included in the controller illustrated in FIG. 2. Further, receiver 104 illustrated in FIG. 10 may be included in the transceiver illustrated in FIG. 2.

Controller 101 determines, for example, control information related to the operation based on the AI/ML of terminal 200 and outputs the determined information to signal generator 102. The control information related to the operation of terminal 200 based on the AI/ML may include, for example, at least one of the information related to the reporting of the information related to the computational complexity/power consumption described above, the information related to the determination of the use of the AI/ML model on the UE side, and the information related to the performance monitoring of the AI/ML model. Further, in a case where controller 101 receives the control information related to the AI/ML model of terminal 200 from the function of processing the AI/ML (e.g., in a case of being input from decoder 107), controller 101 may output the control information related to the AI/ML model to signal generator 102.

Further, controller 101 may output, for example, the information related to the computational complexity/power consumption of terminal 200 or the report of the performance monitoring from decoder 107 to the function of processing the AI/ML.

Further, controller 101 determines, for example, information for terminal 200 to receive a downlink signal and outputs the determined information to signal generator 102. The information for terminal 200 to receive the downlink signal may include, for example, information related to resource allocation of a downlink data channel (e.g., physical downlink shared channel (PDSCH)) or a downlink control channel (e.g., physical downlink control channel (PDCCH)), and information related to an encoding and modulation scheme (e.g., a modulation and coding scheme (MCS)).

Further, controller 101 determines, for example, information for terminal 200 to transmit an uplink signal (e.g., the CSI report) and outputs the determined information to signal generator 102, extractor 105, demodulator 106, and decoder 107. The information for terminal 200 to transmit the uplink signal may include, for example, information related to resource allocation of an uplink data channel (e.g., physical uplink shared channel (PUSCH)) or uplink control channel (e.g., physical uplink control channel (PUCCH)), information related to an encoding and modulation scheme (e.g., MCS), and information related to CSI reporting.

Signal generator 102 generates a data signal or a control signal bit sequence by using, for example, the information input from controller 101 and applies coding as necessary. Further, signal generator 102 modulates the encoded bit sequence to generate a modulated signal (e.g., symbol sequence) and maps the modulated signal to the radio resource indicated by controller 101. Signal generator 102 outputs the mapped signal to transmitter 103.

Transmitter 103 performs, for example, transmission waveform generation processing, such as OFDM on the signal input from signal generator 102. Further, in a case of OFDM transmission using a cyclic prefix (CP), transmitter 103 performs, for example, inverse fast Fourier transform (IFFT) processing on the signal and adds the CP to the IFFT signal. Further, for example, transmitter 103 performs radio frequency (RF) processing, such as D/A conversion or up-conversion on the signal and transmits a radio signal to terminal 200 via an antenna.

Receiver 104 performs RF processing, such as down-conversion or A/D conversion on the uplink signal received from terminal 200 via an antenna, for example. Further, in the case of OFDM transmission, receiver 104 performs, for example, Fast Fourier Transform (FFT) processing on the received signal and outputs the obtained frequency domain signal to extractor 105.

Extractor 105 extracts, for example, a radio resource portion in which the uplink signal (e.g., PUSCH or PUCCH) is transmitted from the received signal input from receiver 104 based on the information input from controller 101 and outputs the extracted radio resource portion to demodulator 106.

Demodulator 106 demodulates, for example, the uplink signal (e.g., PUSCH or PUCCH) input from extractor 105 based on the information input from controller 101. Demodulator 106 outputs, for example, the demodulation result to decoder 107.

Decoder 107 performs, for example, error correction decoding on the uplink signal (e.g., PUSCH or PUCCH) based on the information input from controller 101 and the demodulation result input from demodulator 106, to obtain a decoded received bit sequence. For example, in a case where the information related to the computational complexity/power consumption from terminal 200 is included in the received bit sequence after the decoding, decoder 107 outputs the information to controller 101.

### [Configuration of Terminal]

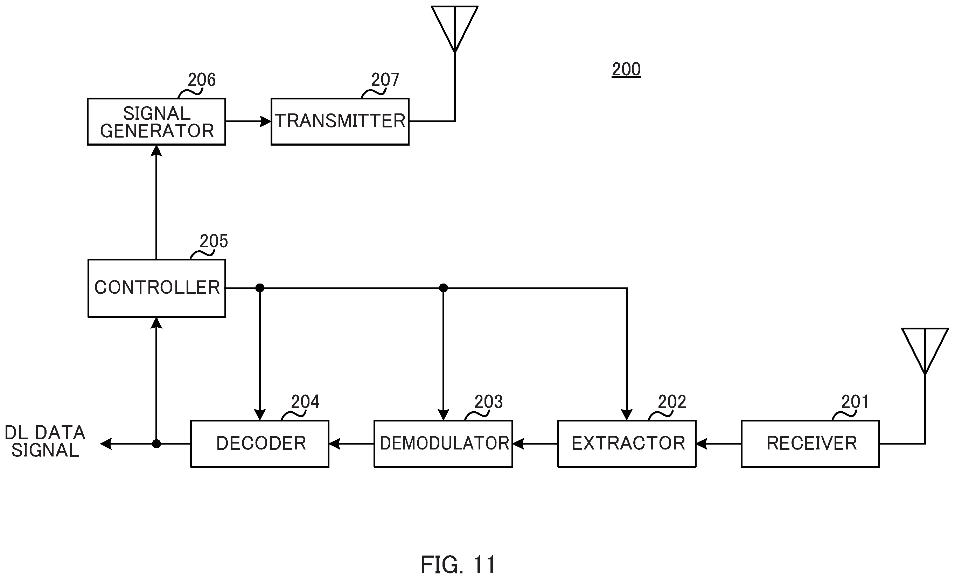

FIG. 11 is a block diagram illustrating an exemplary configuration of terminal 200 according to an exemplary embodiment of the present disclosure. For example, in FIG. 11, terminal 200 includes receiver 201, extractor 202, demodulator 203, decoder 204, controller 205, signal generator 206, and transmitter 207.

At least one of extractor 202, demodulator 203, decoder 204, controller 205, and signal generator 206 illustrated in FIG. 11 may be included in the controller illustrated in FIG. 3. Further, transmitter 207 illustrated in FIG. 11 may be included in the transmitter illustrated in FIG. 3.

Receiver 201 receives, for example, a downlink data signal (e.g., a downlink data signal or downlink control information) from base station 100 via an antenna and performs RF processing, such as down-conversion or A/D conversion on a radio reception signal, to obtain a reception signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, a radio resource portion in which the downlink control signal can be included from the reception signal input from receiver 201 based on information related to the radio resource of the downlink control signal input from controller 205 and outputs the extracted radio resource portion to demodulator 203. Further, extractor 202 extracts a radio resource portion possibly including a downlink data signal, based on information on a radio resource of the data signal input from controller 205 and outputs the radio resource portion to demodulator 203.

Demodulator 203 demodulates, for example, based on information input from controller 205, a signal input (e.g., PDCCH or PDSCH) from extractor 202 and outputs the demodulation result to decoder 204.

Decoder 204 performs error correction decoding on PDCCH or PDSCH by using, for example, the information input from controller 205 and the demodulation result input from demodulator 203 and obtains, for example, a control signal or a downlink data signal. Decoder 204 outputs the control signal to controller 205.

Controller 205 specifies, for example, information related to the downlink transmission based on the information obtained from the control signal input from decoder 204 and outputs the specified information to extractor 202, demodulator 203, and decoder 204. Further, controller 205 specifies, for example, information related to the uplink transmission based on the information obtained from the control signal input from decoder 204 and outputs the specified information to signal generator 206. Further, controller 205 generates the information related to the computational complexity/power consumption by the above-described method and outputs the information to signal generator 206.

Signal generator 206 generates an uplink data signal or an uplink control signal based on the information related to the computational complexity/power consumption input from controller 205 or the information related to the uplink transmission, and maps the bit sequence of the generated signal to a radio resource by encoding and modulating the generated bit sequence. Signal generator 206 outputs, for example, the uplink signal in which the signal is mapped to transmitter 207.

Transmitter 207 generates a transmission signal waveform, such as OFDM, for the signal inputted from signal generator 206. Further, transmitter 207 performs, for example, IFFT processing on the signal in a case of OFDM transmission using a CP or DFT-s-OFDM transmission and adds the CP to the signal after the IFFT. Further, when generating a single carrier waveform, such as a DFT-s-OFDM waveform, for example, a DFT may be added in front of signal generator 206 (not illustrated) in transmitter 207. Further, transmitter 207 performs, for example, RF processing such as D/A conversion and up-conversion on a transmission signal, and transmits a radio signal to base station 100 via the antenna.

The embodiments according to one non-limiting exemplary example of the present disclosure have been each described, thus far.

The AI/ML model may also use different AI/ML models depending on parameters, such as a cell, a site, a transmission and reception point (TRP), a beam, a position (location), a movement speed of the UE, a radio channel, such as multipath, a congestion status of the cell, and traffic to be transmitted.

Further, the term "Mobility" used in the above-described embodiments may include handover in an RRC CONNECTED mode and reselection in an RRC IDLE or RRC INACTIVE mode. Further, the term "Mobility" may include a movement between the TRPs, the switching of the beams, a movement of the position (location), and the like.

Further, in the present disclosure, the signal/message/signaling used for the indication may be a control plane message (e.g., UCI or MAC-CE), may be an RRC signal, or may be an indication via DCI that is physical layer signaling.

### (Supplementary Note)

Information indicating whether terminal 200 supports the functions, operations, or pieces of processing that have been indicated in the above-mentioned embodiments and supplementary notes may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and supplementary notes. Alternatively, the capability information may include information elements that indicate whether terminal 200 supports a combination of any two or more of the functions, operations, or pieces of processing that have been described in the above-mentioned embodiments, variations, and supplementary notes.

Based on, for example, the capability information received from terminal 200, base station 100 may determine (or decide or assume) a function, an operation, or processing supported (or not supported) by terminal 200, which is a transmission source of the capability information. Base station 100 may execute operations, processes, or control in accordance with a determination result based on the capability information. For example, base station 100 may control processing related to the AI/ML model based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by the standard or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, the base station may be replaced with a UE. The base station may be a relay apparatus that relays communication between a higher node and a UE. The base station may be a roadside unit as well.

### (Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and sidelink channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

Further, the present disclosure may be applied to any of a terrestrial network or a network other than a terrestrial network (NTN: Non-Terrestrial Network) using a satellite or a High Altitude Pseudo Satellite (HAPS). Further, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

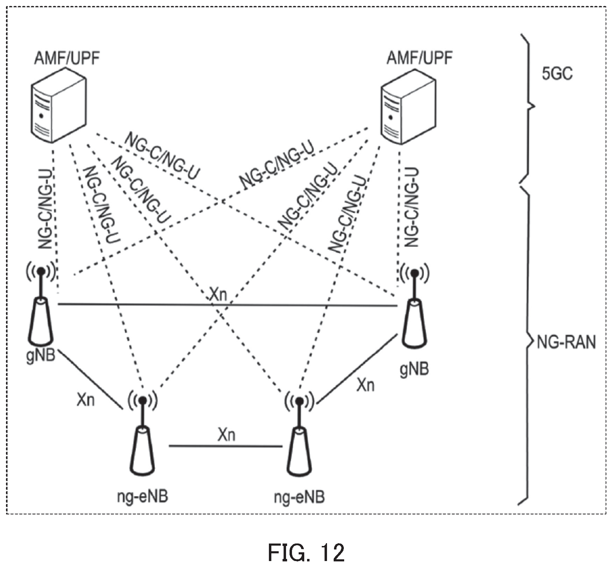

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 12 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

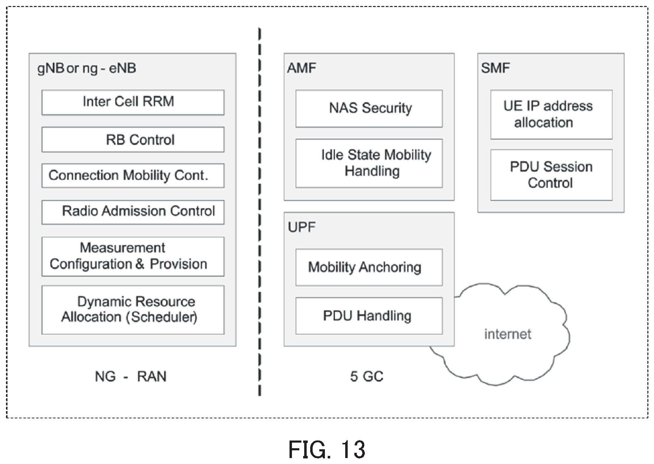

FIG. 13 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Further, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data indication triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data indication.

### <RRC Connection Setup and Reconfiguration Procedure>

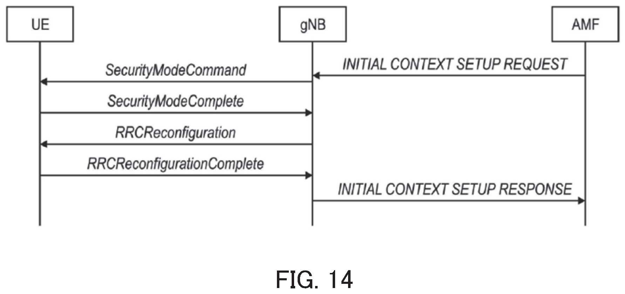

FIG. 14 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

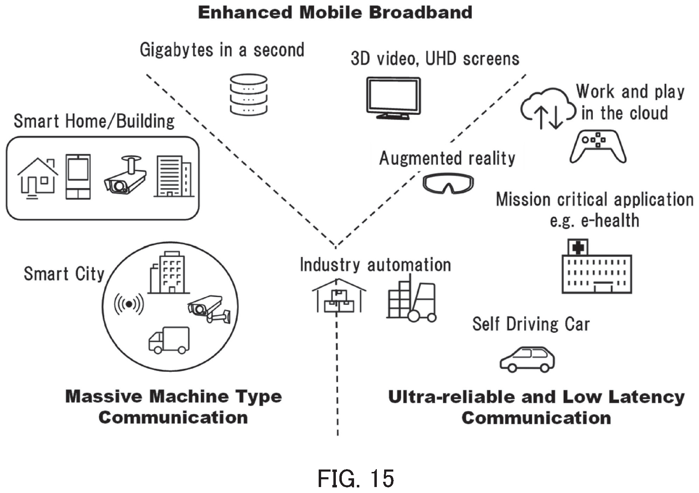

FIG. 15 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 15 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as radio control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 14. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

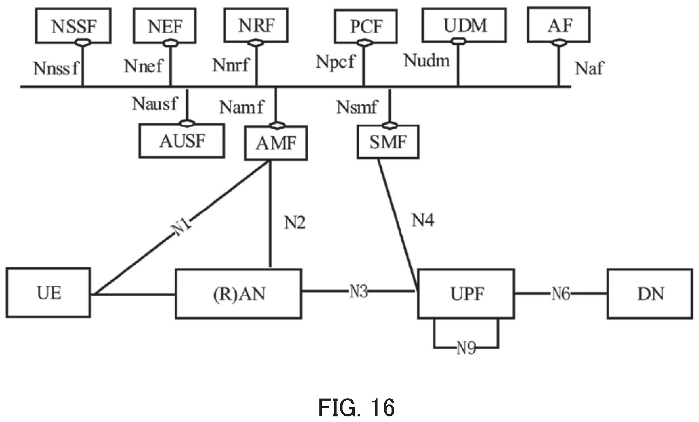

FIG. 16 illustrates a 5G NR non-roaming reference architecture (see TS 23.501 v16.1.0, section 4.23). An Application Function (AF) (e.g., an external application server hosting 5G services, exemplarily described in FIG. 15) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 16 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to one exemplary embodiment of the present disclosure includes: control circuitry, which, in operation, determines control information related to at least one of computational complexity and/or power consumption due to use of an artificial intelligence model on a terminal side; and transmission circuitry, which, in operation, transmits the control information.

In one exemplary embodiment of the present disclosure, the control information includes information related to a comparison between at least one of the computational complexity and/or the power consumption in a case where the artificial intelligence model is used, and at least one of the computational complexity and/or the power consumption in a case where the artificial intelligence model is not used.

In one exemplary embodiment of the present disclosure, the control information includes information related to a difference value between at least one of the computational complexity and/or the power consumption in a case where the artificial intelligence model is used, and at least one of the computational complexity and/or the power consumption in a case where the artificial intelligence model is not used.

In one exemplary embodiment of the present disclosure, the control information includes information related to a comparison or a difference value between at least one of the computational complexity and/or the power consumption in a case where a first artificial intelligence model is used, and at least one of the computational complexity and/or the power consumption in a case where a second artificial intelligence model is used.

In one exemplary embodiment of the present disclosure, the control information includes information related to a comparison or a difference value between at least one of the computational complexity and/or the power consumption in a case where a first parameter of the artificial intelligence model is used, and at least one of the computational complexity and/or the power consumption in a case where a second parameter of the artificial intelligence model is used.

In one exemplary embodiment of the present disclosure, the control information includes information related to a usage rate or an occupancy rate of at least one of the computational complexity and/or the power consumption in the terminal.

In one exemplary embodiment of the present disclosure, recognition related to a method of determining the control information is shared between a network and the terminal.

In one exemplary embodiment of the present disclosure, information related to the method is defined in advance by a standard, is reported from the terminal to the network when reporting capability of the terminal or ability information related to application of the artificial intelligence model, is configured from the network to the terminal, or is reported from the terminal to the network when reporting the control information.

In one exemplary embodiment of the present disclosure, in a case where the terminal performs a performance monitoring process of the artificial intelligence model, the control information is reported from the terminal to a network together with information related to the performance monitoring process.

In one exemplary embodiment of the present disclosure, the control information is reported from the terminal to a network together with capability of the terminal related to the artificial intelligence model.

In one exemplary embodiment of the present disclosure, the control information is reported from the terminal to a network in a case where a trigger from the network is indicated, in a case where a timer expires, and in a case where information related to at least one of the computational complexity and/or the power consumption exceeds a threshold value.

A base station according to one exemplary embodiment of the present disclosure includes: reception circuitry, which, in operation, receives control information related to at least one of computational complexity and/or power consumption due to use of an artificial intelligence model on a terminal side; and control circuitry, which, in operation, controls the use of the artificial intelligence model on the terminal side, based on the control information.

A communication method according to one exemplary embodiment of the present disclosure includes: determining, by a terminal, control information related to at least one of computational complexity and/or power consumption due to use of an artificial intelligence model on a terminal side; and transmitting, by the terminal, the control information.

A communication method according to one exemplary embodiment of the present disclosure includes: receiving, by a base station, control information related to at least one of computational complexity and/or power consumption due to use of an artificial intelligence model on a terminal side; and controlling, by the base station, the use of the artificial intelligence model on the terminal side, based on the control information.

The disclosure of Japanese Patent Application No. 2023-129364, filed on August 8, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102, 206 Signal generator
103, 207 Transmitter
104, 201 Receiver
105, 202 Extractor
106, 203 Demodulator
107, 204 Decoder
200 Terminal
251 CSI generator
252 CSI reconstructor
253 Performance monitor
254 CQI generator

## Claims

1. A terminal, comprising:
control circuitry, which, in operation, determines control information related to at least one of computational complexity and/or power consumption due to use of an artificial intelligence model on a terminal side; and
transmission circuitry, which, in operation, transmits the control information.

2. The terminal according to claim 1, wherein, the control information includes information related to a comparison between at least one of the computational complexity and/or the power consumption in a case where the artificial intelligence model is used, and at least one of the computational complexity and/or the power consumption in a case where the artificial intelligence model is not used.

3. The terminal according to claim 1, wherein, the control information includes information related to a difference value between at least one of the computational complexity and/or the power consumption in a case where the artificial intelligence model is used, and at least one of the computational complexity and/or the power consumption in a case where the artificial intelligence model is not used.

4. The terminal according to claim 1, wherein, the control information includes information related to a comparison or a difference value between at least one of the computational complexity and/or the power consumption in a case where a first artificial intelligence model is used, and at least one of the computational complexity and/or the power consumption in a case where a second artificial intelligence model is used.

5. The terminal according to claim 1, wherein, the control information includes information related to a comparison or a difference value between at least one of the computational complexity and/or the power consumption in a case where a first parameter of the artificial intelligence model is used, and at least one of the computational complexity and/or the power consumption in a case where a second parameter of the artificial intelligence model is used.

6. The terminal according to claim 1, wherein, the control information includes information related to a usage rate or an occupancy rate of at least one of the computational complexity and/or the power consumption in the terminal.

7. The terminal according to claim 1, wherein, recognition related to a method of determining the control information is shared between a network and the terminal.

8. The terminal according to claim 7, wherein, information related to the method is defined in advance by a standard, is reported from the terminal to the network when reporting capability of the terminal or ability information related to application of the artificial intelligence model, is configured from the network to the terminal, or is reported from the terminal to the network when reporting the control information.

9. The terminal according to claim 1, wherein, in a case where the terminal performs a performance monitoring process of the artificial intelligence model, the control information is reported from the terminal to a network together with information related to the performance monitoring process.

10. The terminal according to claim 1, wherein, the control information is reported from the terminal to a network together with capability of the terminal related to the artificial intelligence model.

11. The terminal according to claim 1, wherein, the control information is reported from the terminal to a network in a case where a trigger from the network is indicated, in a case where a timer expires, and in a case where information related to at least one of the computational complexity and/or the power consumption exceeds a threshold value.

12. A base station comprising:
reception circuitry, which, in operation, receives control information related to at least one of computational complexity and/or power consumption due to use of an artificial intelligence model on a terminal side; and
control circuitry, which, in operation, controls the use of the artificial intelligence model on the terminal side, based on the control information.

13. A communication method, comprising:
determining, by a terminal, control information related to at least one of computational complexity and/or power consumption due to use of an artificial intelligence model on a terminal side; and
transmitting, by the terminal, the control information.

14. A communication method, comprising:
receiving, by a base station, control information related to at least one of computational complexity and/or power consumption due to use of an artificial intelligence model on a terminal side; and
controlling, by the base station, the use of the artificial intelligence model on the terminal side, based on the control information.

15. An integrated circuit for controlling a process of a terminal, the process comprising:
determining control information related to at least one of computational complexity and/or power consumption due to use of an artificial intelligence model on a terminal side; and
transmitting the control information.

16. An integrated circuit for controlling a process of a base station, the process comprising:
receiving control information related to at least one of computational complexity and/or power consumption due to use of an artificial intelligence model on a terminal side; and
controlling the use of the artificial intelligence model on the terminal side, based on the control information.
